# EUROPEAN PATENT APPLICATION

(11) **EP 2 146 196 A2**
(43) Date of publication of application: **20.01.2010**
(21) Application number: 09460030.1
(22) Date of filing: 14.07.2009
(51) Int. Cl.: G01N 19/04

(54) **Method and device for control of elements in particular polymers while sliding influences**

(30) Priority: 15.07.2008 PL 38567408
(71) Applicant: Politechnika Lubelska, 20-618 Lublin (PL)
(72) Inventor: Klepka, Tomasz, 20-572 Lublin (PL)
(74) Representative: Belz, Anna

(57) **Abstract**

The method and the device for testing elements, particularly the polymers with sliding interactions is specific due to the fact that the sliding polymer element in the form of a sample (8) gets into contact with another polymer element, counter-sample (5) and is fixed to the driving-measuring system (1) which provides movement and measurement by tensometric system (2) of the axial-pivotal force measurement in the counter-sample (5) , which in the housing (3) , is moved with a plane motion vertically up with a constant linear speed of 1 to 13 mm/min, with a constant pressure of 20-100 N, coming from the levers operating in the cross system, while one of the arms of the lever (6) is immobile and ended with a handle (7) for connecting the tested sample (8) and the other arm of the lever (9) is mobile and ended with a roller disc (11) and the load (12), connected by a flexible connector (10) with lever (6) and the lever (9) on one side and the pressure (13) with the roller bearings (14) leading the counter sample (5) during the tests.

## Description

The subject of the invention is the method and the device for testing elements, particularly the polymers, with sliding interactions, with one-sided contact of the elements, one of which moves in a plane motion.

So far methods for testing elements with their sliding interactions have been known and described in a book written by M. Hebda and A. Wachal entitled: "Tribology", WNT, Warszawa 1980, page 524-536. Their characteristics is that the motion of structural element made in a sliding system by a tested sample is reciprocating with an external contact with another structural element, i.e. the tested counter-sample. The contacting elements, i.e. the sample and counter-sample, especially made for the tribological tests, frequently in compliance with the standards, are rigid and little-deformable and have various shapes and relatively small sizes. The book also describes the tests of a structural element, such as bearing half-shell, which is pressed against the structural element in the form of a shaft of 6,35 mm in diameter, rotating with 200 rev/min. The pressing force of the two bearing half-shells increases in certain time intervals, reaching the maximum value 30000 N. This method allows for defining the friction value after destruction of the cylinder in the area of the notch. There are also tests consisting in the measurement of friction force and the friction torque while moving in to-and-fro motion of structural elements in the form of two cylinders, being in contact along the curvature of positive and negative radius, with total surface of friction of 40 mm². The speed of moving elements ranges from 0,03 to 0,57 m/s, and the measuring load is performed with spring-like loading system which produces the unit pressure on the samples ranging from 0 to 15 MPa. In other known handbooks by Z. Rymuza: "Tribology of sliding polymers" WNT, Warsaw 1986, T. A. Stolarski: "Tribology in Machine Design", Heinemann, Oxford 1990, and also R. Sikora: "High-molecular plastics. Types, properties and structure", Technical University of Lublin Publishing House, Lublin 1991, there is general information on tests on sliding interactions. However the designs of devices mainly for tribological tests on various sliding interactions, are known from Polish and foreign patent specifications. Among others, in a Polish patent specifications no.no. 177192, 180083, the sample in the form of a pin or a ball is pressed to the frontal surface of a disc, which is rotating with a definite speed. The measurement of friction is made with a force dynamometer. In another Polish patent specification no. 191 870 the sample and counter-sample of big sizes are wound on the measuring drum of a large diameter and a definite belting equal to π/2ö5π rad, and the counter-sample protrudes from both sides of the tested sample on a considerable distance. During the tests the counter-sample is moving with relation to the tested sample with a speed ranging from 0,1 to 7 m/min, and the value of friction force is measured with a dynamometer. In American patent specifications no.no. 4798080, 5259236, there is information on devices measuring the friction force for flat big sized-sliding surfaces.

The essence of testing the elements, particularly the polymers with sliding interactions, whose tested elements having various shapes of small sizes, while the sample and counter-sample are pressed onto each other with various forces of different values and move in relation to each other in different directions, consists in that the tested polymer element, i.e. a sample and being the fragment of a finished product, like a tube or section, with elements of geometric macrostructure or a sliding layer on the tested area, is fixed in the handle of the device. Next the sample is contacted with another structural polymer element with an counter-sample, possibly of a cylinder or non-cylinder external surface, such as a section, a tube of small diameter, rod, cable, conductor or a line. The counter-sample is fixed with a catch into the driving-measuring unit which ensures a uniform plane motion and facilitates the measurement of a resisting force that develops during the contact with the tested sample. The counter-sample is moved with a uniform plane motion in vertical direction up with a constant linear speed ranging from 0,1 to 13 mm/min, possibly 5mm/min. The sample and counter-sample are contacted on one side with each other, with a constant pressure, with a given force ranging from 20 to 100 N, possibly 50 N. The area of the contact of the tested sample and counter-sample is isolated from the environment in a given temperature from 0 to 30°C and relative humidity from 35 to 68%.

The essence of the device for testing elements, particularly the polymers, with sliding interactions, and having the driving unit, the tensometric unit for measuring the force, the housing, a microprocessing unit and cross lever, consists in that the driving system /unit is connected with tensometric system for measuring the force, which is constantly connected to the PC computer, and through the catch, it is permanently fixed to the counter-sample in the form of a section, tube of small diameter, rod, cable, conductor or a line. The counter-sample is placed between the arms of cross lever which are covered with a housing, while one of the lever arms is not moving and tipped with a handle for fixing the sample, and the second arm is moving and ends with a flexible connector binding, which passes through the roller disc fixed on the immobile lever arm and on the other side is tipped with a load of variable mass, which produces a force through lever system transfer on the pressure by means of roller bearings. Cross lever is located in the vertical plane and the counter-sample during the test, has a post-axial tension ranging from 0-30 N.

The beneficial effect of the investigation is that the method makes modeling of numerous important practically and so far not identified tribologic bonds possible and the device ensures reliable functioning and allows for carrying on tests of mutual reaction of structural elements made of polymers, and thus extends the possibilities of testing the sliding systems with one-side slide, in a given temperature and relative humidity.

The subject of the invention is presented on an exemplary drawing on which a general scheme of testing device is presented.

The method of testing elements, particularly of polymers with sliding interactions consists in that a tested polymer element being a sample and being a part of a finished product, is fixed in the handle of the device. Next the sample is brought into contact with a second polymer structural element - counter-sample which is connected to a driving-measuring unit, ensuring a uniform plane motion and the measurement of resisting force that occurs during the contact with the tested sample. The counter-sample is moved vertically up in a uniform sliding motion with a constant linear speed ranging from 0,1 to 13 m/min. The sample and counter-sample get in contact with each other on one side, with a constant pressure, with a given force ranging from 20 to 100 N. The area of contact of the tested sample and counter-sample is isolated from the surroundings with a given temperature from 0 to 30°C and relative humidity from 35 to 68%.

The device for testing elements, particularly the polymers with sliding interactions, consists of a driving system 1, tensometric system 2 of the force measurement connected permanently to PC computer, catch 4 for fixing the counter-sample 5 and the two levers functioning in the cross system. One arm of the lever 6 is immobile and tipped with a handle 7 for fixing the sample 8, and the second arm of the lever 9 is mobile and tipped with a fixing of the flexible connector 10 which passes through a roller disc 11 fixed to the immobile arm 6 and on the other side is tipped with a load 12 of variable mass, which produces a pressure by transfer of the lever system 6 and 9 onto the pressure 13 by roller bearings 14 leading during the tests the counter-sample 5 with relation to sample 8, and the cross lever is placed in horizontal plane, and the counter-sample 5 during the test has post-axial tension extending within the range from 0 to 30 N.

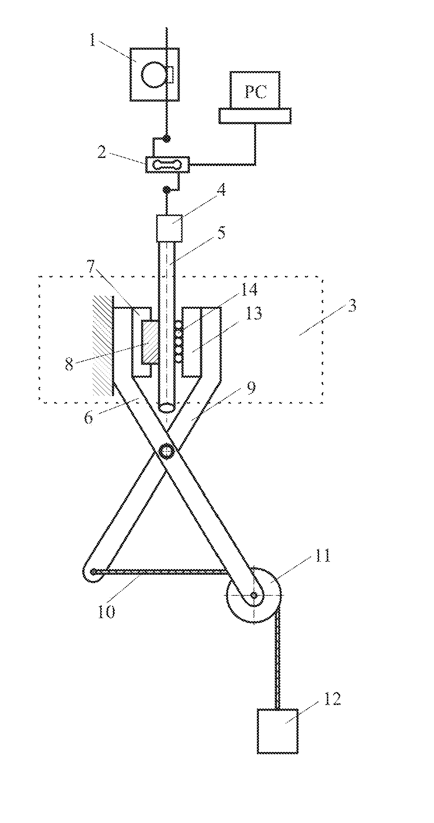

## Claims

1. The method of testing elements, particularly the polymers with sliding interactions, whose tested elements have different shapes of small sizes, while the sample and counter-sample are pressed to each other with different forces of variable values and move in relation to each other in different directions **wherein** that the tested polymer element in the form of a sample which is a part of a finished product, possibly a tube or section, having on a given surface formed elements of geometric macrostructure or a sliding layer, is fixed to a handle of the device, and the sample is contacted with the second structural polymer element - counter-sample, possibly of cylindrical shape or non-cylindrical external surface, such as section, tube of small diameter, rod, cable or line, and the counter-sample is fixed by means of a catch to the driving-measuring unit which ensures a uniform plane motion and allows for measuring the resisting force that occurs during the contact with the tested sample and the counter-sample is moved with a uniform plane motion vertically up with a constant linear speed ranging from 0,2 to 13 mm/min, possibly 5 mm/min, and the sample and counter-sample are in contact on one side with a constant pressure with a given force ranging from 20-100 N, possibly 50 N.

2. The method according to clause 1, **wherein** that the contact surface of tested sample and counter-sample is isolated from the surroundings with a definite temperature from 0 to 30°C and the relative humidity from 35 to 68%.

3. The device for testing elements, particularly polymers with sliding interactions, having the drive system, the tensometric system for force measurement, the housing, micro-processing unit and the cross lever **wherein** that the drive system (1) is connected with the tensometric system (2) of force measurement which is permanently connected with (PC) computer, and through a catch (4) it is connected permanently with counter-sample (5) in the form of a section, tube of small diameter, rod, cable, conductor or line, and the counter-sample (5) is placed between the arms of cross lever, closed with housing (3) , while one of the lever arms (6) is immobile and is tipped with a handle (7) for fixing the sample (8), and the second arm of the lever (9) is mobile and ended with a flexible connector bonding (10) which passes through a roller disc (11) fixed on the immobile arm of the lever (6) and on the other side is ended with a load (12) with a variable mass which produces a pressure through transfer of the lever system on the pressure (13) through the cylindrical bearings (14).

4. The device according to clause 3, **wherein** that the cross lever is placed in vertical plane.

5. The device according to clause 3, **wherein** that the counter-sample (5) during the test, has a axial-pivotal extensive tension ranging from 0-30 N.
